(19) Europäisches Patentamt
European Patent Office
Office européen des brevets

(11) Numéro de publication : **0 377 525 B1**

(12) **FASCICULE DE BREVET EUROPEEN**

(45) Date de publication du fascicule du brevet :
**11.11.92 Bulletin 92/46**

(51) Int. Cl.$^5$ : **A01M 7/00, A01B 71/06**

(21) Numéro de dépôt : **90400002.3**

(22) Date de dépôt : **02.01.90**

(54) **Dispositif pour projeter un produit pulvérisé sur des végétaux.**

(30) Priorité : **04.01.89 FR 8900040**

(43) Date de publication de la demande :
**11.07.90 Bulletin 90/28**

(45) Mention de la délivrance du brevet :
**11.11.92 Bulletin 92/46**

(84) Etats contractants désignés :
**DE ES FR GB IT**

(56) Documents cités :
**EP-A- 0 027 295**
**EP-A- 0 353 132**
**CH-A- 284 008**
**FR-A- 1 394 595**

(56) Documents cités :
**FR-A- 2 080 282**
**FR-A- 2 278 406**
**GB-A- 828 029**
**GB-A- 2 016 252**
**US-A- 4 172 557**

(73) Titulaire : **NICOLAS PULVERISATEURS**
**Z.I. Laville**
**F-47240 Bon Encontre (FR)**

(72) Inventeur : **Ballu, Patrick Jean-Marie**
**4 Rue du Général Baratier**
**F-51100 Reims (FR)**

(74) Mandataire : **Aron, Georges et al**
**Cabinet de Boisse 37, Avenue Franklin D.**
**Roosevelt**
**F-75008 Paris (FR)**

Jouve, 18, rue Saint-Denis, 75001 PARIS

EP 0 377 525 B1

## Description

La présente invention est relative à un dispositif pour pulvériser un produit, par exemple un produit de traitement, sur des végétaux.

On connaît, et on utilise couramment, une grande variété de dispositifs du genre indiqué. Ils comprennent, de façon générale, un châssis, pourvu de moyens d'accrochage ou d'attelage à l'arrière d'un tracteur ou de fixation sur un plateau mobile, ce châssis étant équipé de roues dans le cas d'un dispositif dit "tracté", ou en étant dépourvu dans le cas d'un dispositif dit "porté", un réservoir de produit, monté sur le châssis, une turbine, capable de créer un écoulement d'air, cette turbine étant portée par le châssis, des moyens de guidage de l'écoulement d'air, capables de diriger l'écoulement d'air sortant de la turbine vers les végétaux qu'on désire traiter, et des moyens pour envoyer le produit sous forme pulvérisée, dans l'écoulement d'air qui sort de ces moyens de guidage.

Diverses dispositions sont proposées : on peut prévoir, par exemple, que la turbine, avec les moyens de guidage de l'écoulement d'air, est située à l'arrière du dispositif avec son axe de rotation horizontal, le plus souvent longitudinal, rarement transversal. Dans ce cas, le réservoir est situé à faible distance du tracteur, ce qui diminue le poids en porte-à-faux dans le cas d'un outil porté. Les retombées de produit sur le tracteur et sur le dispositif lui-même sont réduites au minimum, en raison du déplacement concomitant du tracteur et du dispositif. En revanche, le système présente l'inconvénient de conduire à des sorties d'air placées relativement haut, ce qui ne permet pas de traiter par-dessous les végétaux tels que des arbres fruitiers à branches basses. En outre, la transmission de force depuis la prise de force du tracteur jusqu'à la turbine est difficile. On prévoit, dans certains cas, un arbre de transmission situé au-dessous du réservoir. Dans d'autres cas, l'arbre de transmission traverse le réservoir lui-même, grâce à des joints étanches. On pourrait également prévoir des transmissions faisant intervenir l'électricité ou l'énergie d'un fluide.

Dans d'autres dispositions, on place la turbine, à axe horizontal longitudinal, et les conduits de guidage, à l'avant du dispositif, c'est-à-dire à proximité du système d'accrochage ou d'attelage. On a alors l'avantage d'une transmission courte, et peu coûteuse, en revanche, la disposition des sorties d'air n'est pas des plus satisfaisante. En effet, d'une part, elles sont encore trop hautes, et en plus elles occasionnent des retombées sur le réservoir et le tracteur.

On connaît également des dispositifs dans lesquels la turbine est placée à l'avant du dispositif, et un conduit de guidage, passant sous le réservoir, débouche à l'arrière de l'ensemble. Cette solution, qui permet d'avoir des sorties d'air très basses et combine par ailleurs les avantages des deux dispositions ci-dessus, a cependant pour inconvénient une perte d'énergie relativement importante. En effet, la turbine, dont l'axe est horizontal et parallèle à la direction d'avancement, projette un écoulement d'air dans un plan vertical perpendiculaire à l'avancement. Il est nécessaire ensuite de faire faire à cet écoulement d'air un premier tournant à angle droit pour le faire passer, parallèlement à l'avancement, sous le réservoir, puis de lui faire subir un deuxième changement de direction, également à angle droit, pour l'envoyer dans un plan vertical, afin qu'il soit projeté latéralement sur les végétaux. II. en résulte des pertes d'énergie non négligeables. Par ailleurs, tous les dispositifs indiqués ci-dessus comportent des turbines à axe horizontal, et quel que soit leur emplacement, ils prennent une place relativement importante et augmentent la longueur du dispositif.

On connaît aussi par US-A-3.164.324, US-A-4.172.537, FR-A-1.394.595, des dispositifs comprenant une turbine à axe vertical, entraînée en rotation à l'aide d'un renvoi d'angle, coaxial à la turbine et relié, par un arbre de transmission horizontal, à la prise de force d'un tracteur.

Le premier de ces documents décrit une turbine hélicoïde qui dirige axialement un écoulement d'air axial vers le haut, la sortie d'air étant placée haut. Le second document décrit également une turbine hélicoïde, mais celle-ci est disposée pour diriger l'écoulement d'air axialement vers le bas, et un système déflecteur fait tourner le trajet de l'air de 90 à 135° pour le diriger vers les vétégaux . La sortie d'air est donc à faible hauteur, mais la perte d'énergie est importante.

FR-A-1.394.595 décrit un dispositif, correspondant au préambule de la revendication 1, destiné à être accroché aux trois points d'attelage d'un tracteur, et qui comprend, disposés sur un même axe vertical, de haut en bas, un réservoir de liquide, une turbine centrifuge à axe vertical, entourée d'un capotage pourvu d'une ou plusieurs sorties d'air situées dans le plan horizontal de la turbine et orientables dans la direction désirée, et un renvoi d'angle, placé dans un châssis porteur et destiné à entraîner la turbine. La turbine et le capotage ont une extension horizontale du même ordre que celle du réservoir.

La présente invention a pour but de fournir un dispositif pour projeter un produit pulvérisé sur des végétaux, qui présente à la fois les avantages suivants :
- possibilité de projeter le produit dans un écoulement d'air dirigé vers l'arrière et situé en partie basse du dispositif,
- possibilité d'utiliser un réservoir de produit de grande capacité,
- faible consommation d'énergie,
- construction simple, avec en particulier, une transmission d'énergie courte pour les moyens de création de l'écoulement d'air.

Pour obtenir ces résultats, l'invention fournit un dispositif pour projeter un produit pulvérisé sur des végétaux, comprenant :

- un châssis, pourvu de moyens pour relier le dispositif à un tracteur,
- un réservoir de produit, porté par le châssis,
- une turbine, capable de créer un écoulement d'air, sensiblement horizontal, parallèle à l'avancement et dirigé vers l'arrière,
- un arbre de transmission pour entraîner la turbine à partir d'une prise de force du tracteur, par l'intermédiaire d'un renvoi d'angle dont l'arbre de sortie est vertical,
- des conduits de guidage de l'écoulement d'air dont les sorties sont disposées à l'arrière du châssis par rapport au réservoir, et capables de diriger l'écoulement d'air sortant de la turbine vers les végétaux,
- et des moyens pour envoyer le produit, sous forme pulvérisée, dans l'écoulement d'air sortant des moyens de guidage,

caractérisé en ce que la turbine est située en avant de la partie centrale du réservoir,

en ce que la turbine fournit à sa sortie un écoulement d'air capable de passer sous la partie centrale du réservoir sans changement de direction ou avec de faibles changements de direction, si bien que l'air qui s'écoule de la turbine vers lesdites sorties d'air passe sous le réservoir en circulant essentiellement d'avant en arrière à travers lesdits conduits de guidage

en ce que le châssis porte une barre d'attelage, capable de pivoter sur un axe vertical par rapport au châssis,

et en ce que ledit renvoi d'angle est monté pour pouvoir pivoter sur l'axe vertical d'articulation de la barre d'attelage au châssis, ou à proximité de cet axe, ce renvoi d'angle ayant une entrée reliée à ladite prise de force et une sortie reliée à la turbine.

L'invention peut s'appliquer indépendamment de la disposition de la turbine, mais on obtient une structure particulièrement simple si la turbine est à axe vertical. On peut par exemple prévoir simplement que le renvoi d'angle comporte un arbre de sortie vertical coaxial, qui commande la turbine par un ensemble à poulies et courroies. Suivant une structure mieux protégée, mais un peu plus coûteuse, le renvoi d'angle comporte un arbre de sortie vertical coaxial, relié à la turbine par un second renvoi d'angle fixe en rotation par rapport au châssis, et relié à la turbine par un arbre de transmission.

On peut en outre prévoir qu'une pompe destinée à envoyer un liquide contenu dans le réservoir vers au moins un pulvérisateur situé à une sortie des moyens de guidage d'air est placée sensiblement sur l'axe de pivotement vertical du renvoi d'angle et son arbre d'entrée est cinématiquement relié à l'arbre d'entrée ou à l'arbre de sortie dudit renvoi d'angle ou éventuellement du second renvoi d'angle. On obtient dans ce cas un entraînement parfaitement homocinétique de la pompe. Avantageusement, dans ce cas, des moyens sont prévus pour débrayer à volonté au moins un des organes constitués par la turbine et la pompe en laissant l'autre fonctionner.

Suivant une réalisation intéressante, lorsque la turbine est à axe vertical et du type centrifuge ou hélicocentrifuge, ladite turbine, et la section adjacente à la turbine du conduit de guidage de l'écoulement d'air, sont placées à la même hauteur au-dessus du sol que les longerons du châssis, entre les longerons du châssis ou parallèlement à ceux-ci.

On peut aussi prévoir, dans ce cas, que la turbine et la section adjacente des conduits de guidage sont placées au-dessus des longerons du châssis. Dans ce cas, la transmission de force entre le renvoi d'angle et la turbine pourra se faire entre les longerons, sous la turbine.

Enfin une disposition particulièrement avantageuse consiste en ce que l'axe vertical d'articulation de la barre d'attelage au châssis est à peu près au milieu de la distance séparant l'essieu des roues dont est équipé le châssis des roues arrière du tracteur. Ainsi, dans les virages, les roues de la remorque passent exactement dans les traces de celles du tracteur (l'articulation est sur la bissectrice de l'angle formé par les essieux). Ceci est un grand avantage dans le traitement des cultures en lignes serrées, ou ayant des bordures étroites. Il n'y a plus de risque d'accrochage des piquets ou des plants d'extrémité de rangs, une fois que le tracteur lui-même est "passé".

L'invention va maintenant être décrite de façon plus détaillée à l'aide d'exemples pratiques, illustrés avec les figures, parmi lesquelles :

La figure 1 est un schéma en élévation d'un premier mode de réalisation du dispositif selon l'invention,

La figure 2 est une vue de dessus schématique, du dispositif de la figure 1,

La figure 3 est une vue, analogue à la figure 1, d'une autre réalisation,

La figure 4 est une vue de dessus de la réalisation de la figure 3 et

La figure 5 est une coupe schématique selon la ligne V-V de la figure 3.

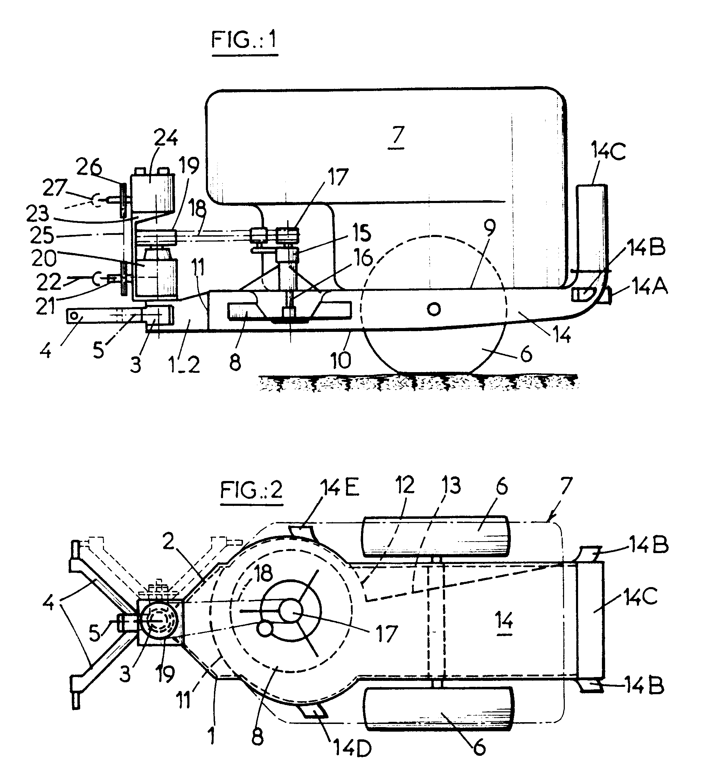

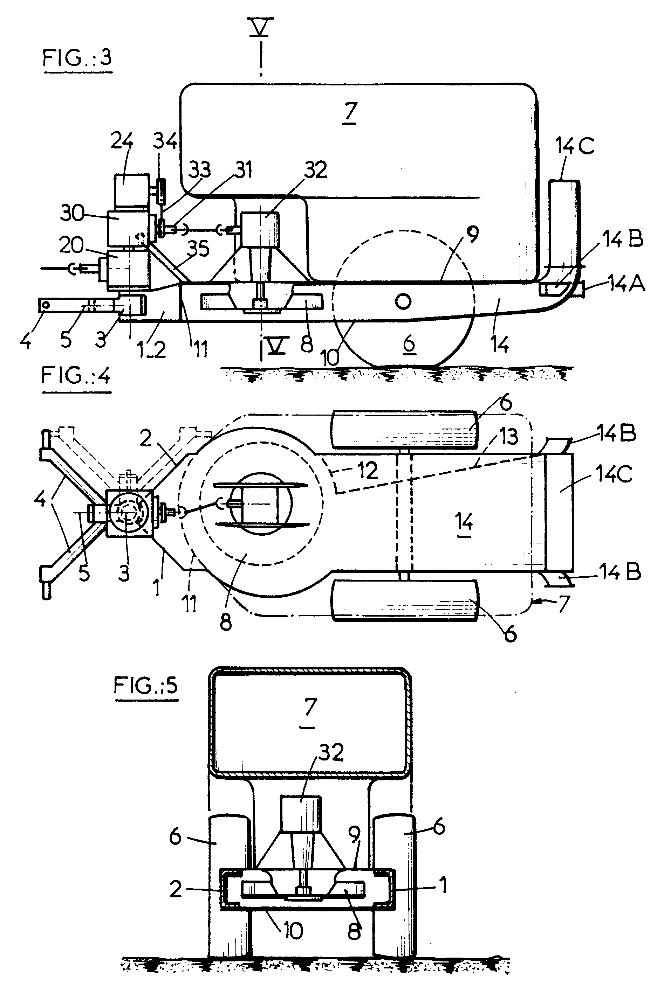

Le dispositif représenté à la figure 1 comprend un châssis formé de deux longerons 1, 2, dont la section est la même que celle qui est indiquée à la figure 5, et qui se rejoignent à l'avant pour porter un axe vertical 3, sur lequel est montée une barre d'attelage 4, pourvue d'un pivot 5, qui permet des débattements limités, l'axe du pivot 5 étant parallèle au sens de la marche.

Le châssis est équipé de deux roues 6. Il porte un réservoir 7, qui peut être rempli de liquide de traitement.

L'axe vertical 3 est sensiblement à égale distance de l'essieu arrière du tracteur, non représenté, et de l'essieu portant les roues 6 dont le châssis est équipé.

Une turbine 8 est disposée entre les longerons 1 et 2, comme cela est indiqué à la figure 5, et en partie sous le réservoir 7. On notera ici que la figure 5 se rapporte à la figure 3, mais la disposition de la turbine par rapport au châssis, comme on le verra plus loin, est identique dans les réalisations des figures 1 et 2 d'une part, et des figures 3 et 4 d'autre part. La volute de sortie de la turbine 8 est limitée extérieurement, c'est-à-dire à droite et à gauche, par les longerons 1 et 2, qui ont une forme adaptée. En haut et en bas, des tôles 9, 10, qui prennent appui sur les longerons 1 et 2, limitent la volute. D'autres tôles verticales, 11, 12, 13 définissent le parcours de l'air émis par la turbine de façon à le faire passer sous le réservoir vers l'arrière. Le conduit 14 de guidage de l'air ainsi formé aboutit à une sortie horizontale vers l'arrière 14A, au niveau des longerons, des sorties horizontales latérales 14B, au même niveau, et une sortie verticale vers le haut 14C. Ces sorties peuvent être reliées à des venturis ou déflecteurs de pulvérisation de liquide par l'intermédiaire de conduits souples ou rigides, de façon connue. Ces conduits souples ou rigides, de même que les venturis, ne sont pas représentés. Il est clair, par ailleurs, que l'invention n'est pas limitée au sens de rotation de la turbine représenté.

On a représenté en 14D et 14E des sorties d'air supplémentaires situées à l'avant, sensiblement à la même hauteur au-dessous du sol que les sorties 14A et 14B, et alimentées directement sur la volute. Ces sorties avant, qui sont facultatives, assurent à peu de frais un complément de pulvérisation en partie basse des plantes.

La turbine 8 est à axe vertical, elle présente son aspiration par le dessus. On pourrait cependant prévoir une aspiration en partie ou totalement par le dessous. Cette disposition présente l'inconvénient de risquer d'aspirer des poussières par temps sec, elle se justifie cependant dans le cas d'une turbine centrifuge à cage, ou de turbines centrifuges doubles ou symétriques. On a représenté, en 15, un palier de turbine. L'axe 16 de la turbine porte des poulies 17, lesquelles sont entraînées par des courroies de transmission 18, reliées à d'autres poulies 19, montées sur l'arbre de sortie vertical d'un renvoi d'angle 20. Ce renvoi d'angle 20 est monté sur la barre d'attelage 4, de façon à tourner avec elle sur son axe vertical. Sa face tournée vers le tracteur est pourvue d'un arbre d'entrée 21 relié à une barre d'accouplement 22 qui peut être solidarisée de la prise de force du tracteur, avec interposition éventuelle de cardans et moyens de coulissement pour faciliter l'attelage.

On conçoit que, lorsque la barre d'attelage pivote de 90° autour de l'axe 3, au cours d'un virage serré, le renvoi d'angle 20 continue d'être entraîné par la barre 22, et la poulie 19 continue d'entraîner la turbine par l'intermédiaire des courroies 18 et des poulies 17, et ceci en parfaite homocinétie.

Un support 23, solidaire du boîtier du renvoi d'angle 20, porte une pompe 24, dont le rôle est de prélever du liquide dans le réservoir et de l'envoyer à la sortie des conduits de guidage. Les tuyaux correspondants n'ont pas été représentés pour des raisons de simplicité. La pompe 24 est entraînée par l'arbre d'entrée 21 du renvoi d'angle 20 à l'aide d'une transmission par courroies 25 et poulies 26 du type classique. Par ailleurs, la pompe 24 est pourvue de moyens 27 pour la relier directement à la prise de force du tracteur, comme représenté en tirets, après avoir déconnecté la courroie 25 et la poulie 26. On peut ainsi entraîner à volonté soit la turbine 8, soit la pompe 24, soit les deux en même temps.

Les figures 3 à 5 décrivent un dispositif dont la structure est la même que celle des figures 1 et 2, La différence résidant seulement dans le mode d'entraînement de la turbine 8 et de la pompe 24. Dans cette seconde disposition, la sortie du renvoi d'angle 20 entraîne un second renvoi d'angle 30, dont l'arbre de sortie 31 est relié à un troisième renvoi d'angle 32 coaxial à la turbine et qui entraîne cette dernière. Simultanément, l'arbre 31 entraîne la pompe 24 par l'intermédiaire d'une courroie 33 et d'une poulie 34.

Des bras 35 immobilisent le renvoi d'angle 30 par rapport au châssis.

Cette réalisation est moins sujette à l'usure qu'une transmission par courroies et poulies; en revanche, elle absorbe moins les variations brusques de couple, par exemple à la mise en marche.

On notera que les dispositions et modes d'entraînement de la pompe et de la turbine ne sont pas liés entre eux. En effet, on peut associer le montage de la pompe prévue à la figure 1 à l'entraînement de la turbine montré à la figure 3 ou vice-versa.

On notera également que des renvois d'angles disposés coaxialement à l'articulation de la barre d'attelage, comme les renvois d'angle 20 et 30 décrits ci-dessus, pourraient être utilisés avec une turbine disposée de façon différente, par exemple avec son axe dans le sens de la marche.

Dans ce qui précède, on a décrit une turbine 8 du type centrifuge. L'homme de métier comprendra facilement qu'on peut, sans difficulté, utiliser à la place une turbine hélicoïde, ou de tout autre type, qui fournit, à sa sortie, un écoulement d'air sensiblement horizontal, parallèle à l'avancement et capable de passer sous le réservoir, de préférence entre les longerons, sans changement de direction ou avec de faibles changements de direction.

**Revendications**

1. Dispositif pour projeter un produit pulvérisé sur des végétaux, comprenant :
   - un châssis (1, 2), pourvu de moyens pour relier le dispositif à un tracteur,
   - un réservoir (7) de produit, porté par le châssis,

- une turbine (8), capable de créer un écoulement d'air, sensiblement horizontal, parallèle à l'avancement et dirigé vers l'arrière,

- un arbre de transmission pour entraîner la turbine à partir d'une prise de force du tracteur, par l'intermédiaire d'un renvoi d'angle (20) dont l'arbre de sortie est vertical,

- des conduits de guidage de l'écoulement d'air (14), dont les sorties (14A, 14B, 14C) sont disposées à l'arrière du châssis par rapport au réservoir, et capables de diriger l'écoulement d'air sortant de la turbine vers les végétaux,

- et des moyens (24) pour envoyer le produit, sous forme pulvérisée, dans l'écoulement d'air sortant des moyens de guidage,

caractérisé en ce que la turbine (8) est située en avant de la partie centrale du réservoir (7),

en ce que la turbine (8) fournit à sa sortie un écoulement d'air capable de passer sous la partie centrale du réservoir (7) sans changement de direction ou avec de faibles changements de direction, si bien que l'air qui s'écoule de la turbine (8) vers lesdites sorties d'air (14A, 14B, 14C) passe sous le réservoir en circulant essentiellement d'avant en arrière à travers lesdits conduits de guidage (14),

en ce que le châssis porte une barre d'attelage (4), capable de pivoter sur un axe vertical par rapport au châssis,

et en ce que ledit renvoi d'angle (20) est monté pour pouvoir pivoter sur l'axe vertical d'articulation de la barre d'attelage au châssis, ou à proximité de cet axe, ce renvoi d'angle ayant une entrée (21) reliée à ladite prise de force et une sortie reliée à la turbine.

2. Dispositif selon la revendication 1, caractérisée en ce que la turbine (8) est disposée avec son axe sensiblement vertical.

3. Dispositif selon la revendication 1 ou 2, caractérisé en ce que le renvoi d'angle comporte un arbre de sortie vertical coaxial, qui commande la turbine par un ensemble à poulies et courroies.

4. Dispositif selon la revendication 1 ou 2, caractérisé en ce que le renvoi d'angle ( 20 ) comporte un arbre de sortie vertical coaxial, relié à la turbine par un second renvoi d'angle (30) fixe en rotation par rapport au châssis, et relié à la turbine par un arbre de transmission.

5. Dispositif selon l'une des revendications 1 à 4, caractérisé en ce qu'une pompe (24) destinée à envoyer un liquide contenu dans le réservoir vers au moins un pulvérisateur situé à une sortie des moyens de guidage d'air est placée sensiblement sur l'axe de pivotement vertical du renvoi d'angle (20) et son arbre d'entrée est cinématiquement relié à l'arbre d'entrée ou à l'arbre de sortie dudit renvoi d'angle (20) ou éventuellement du second renvoi d'angle (30).

6. Dispositif selon la revendication 5, caractérisé en ce que des moyens sont prévus pour débrayer à volonté au moins un des organes constitués par la turbine et la pompe en laissant l'autre fonctionner.

7. Dispositif selon l'une des revendications 1 à 6, dans lequel la turbine (8) est à axe vertical et du type centrifuge ou hélicocentrifuge, caractérisé en ce que ladite turbine, et la section adjacente à la turbine du conduit de guidage de l'écoulement d'air, sont placées à la même hauteur au-dessus du sol que les longerons du châssis, entre les longerons (1, 2) du châssis ou parallèlement à ceux-ci.

8. Dispositif selon l'une des revendications 1 à 6, dans lequel la turbine (8) est à axe vertical, et caractérisé en ce que la turbine (8) et la section adjacente des conduits de guidage sont placées au-dessus des longerons (1, 2) du châssis.

9. Dispositif selon l'une des revendications 7 ou 8, caractérisé en ce qu'il comporte en outre des sorties d'air situées à l'avant (14D, 14E).

10. Dispositif selon l'une des revendications 1 à 9, caractérisé en ce que l'axe vertical d'articulation de la barre d'attelage au châssis est à peu près au milieu de la distance séparant l'essieu des roues dont est équipé le châssis de l'essieu des roues arrières du tracteur.

**Patentansprüche**

1. Gerät zum Versprühen von pulverisierten Produkten auf Pflanzen bestehend aus :

- einem Gestell (1,2) mit Mitteln zur Verbindung der Vorrichtung mit einem Traktor,
- einem auf dem Gestell gelagertem Tank (7) mit Behandlungsmittel,
- einer Turbine (8) zur Erzeugung einer im wesentlichen horizontalen Luftströmung, die parallel zur Fahrtrichtung und nach hinten gelenkt ist,
- einer Kraftübertragungswelle zum Antrieb der Turbine von einer Zapfwelle des Traktors aus, mittels eines Winkelgetriebes (20), dessen Ausgangswelle vertikal angeordnet ist,

- Führungsleitungen (14) für die Luftströmung, deren Ausgänge (14A, 14B, 14C) in Bezug auf den Tank hinten am Gestell angeordnet sind und dazu geeignet sind, die aus der Turbine austretende Luftströmung auf die Pflanzen zu lenken,

- sowie Mitteln (24) zur Leitung des Behandlungsmittels in pulverisierter Form,in die aus den Führungsleitungen austretende Luftströmung,

dadurch gekennzeichnet,

daß die Turbine (8) vor dem Mittelteil des Tanks (7) gelagert ist,

daß die Turbine (8) an ihrem Ausgang eine Luftströmung liefert, welche unter dem Mittelteil des Tanks (7) ohne oder nur mit schwachen Richtungsänderungen verläuft,

und zwar derart, daß die von der Turbine (8) zu den genannten Luftausgängen (14A, 14B, 14C) strömende Luft unter dem Tank verläuft und dabei im wesentlichen von vorne nach hinten über die genannten Führungsleitungen (14) fließt,

daß das Gestell ein Zuggestänge (4) aufnimmt, welches auf einer in Bezug auf das Gestell vertikalen Achse schwenkbar ist,

und, daß das genannte Winkelgetriebe (20) um die vertikale Gelenkachse des Zuggestänge am Gestell schwenkbar angebracht ist, oder in der Nähe dieser Achse, wobei dieses Winkelgetriebe einen mit der genannten Zapfwelle verbundenen Eingang (21) und einen mit der Turbine verbundenen Ausgang aufweist.

2. Gerät nach Anspruch 1, dadurch gekennzeichnet, daß die Turbine (8) mit ihrer Achse im wesentlichen vertikal angeordnet ist.

3. Gerät nach Anspruch 1 oder 2, dadurch gekennzeichnet, daß das Winkelgetriebe eine vertikale, koaxiale Ausgangswelle aufweist, welche die Turbine über eine Konstruktion aus Rollen und Riemen antreibt.

4. Gerät nach Anspruch 1 oder 2, dadurch gekennzeichnet, daß das Winkelgetriebe (20) eine vertikale, koaxiale Ausgangswelle aufweist, welche mit der Turbine über ein zweites, und in Bezug auf das Gestell festes in Rotation Winkelgetriebe (30) verbunden ist, der mit der Turbine über eine Kraftübertragungswelle verbunden ist.

5. Gerät nach einem der Ansprüche 1 bis 4, dadurch gekennzeichnet, daß eine Pumpe (24) zur Leitung einer im Tank befindlichen Flüssigkeit zu mindestens einer, bei einem Ausgang der Luftführungsvorrichtungen gelegenen Sprühvorrichtung im wesentlichen auf der vertikalen Schwenkachse des Winkelgetriebes (20) angebracht ist und ihre Eingangswelle kinematisch mit der Eingangswelle oder der Ausgangswelle des genannten Winkelgetriebes (20) oder eventuell des zweiten Winkelgetriebes (30) verbunden ist.

6. Gerät nach Anspruch 5, dadurch gekennzeichnet, daß Mittel zum beliebigen Auskuppeln von mindestens einem von der Turbine und der Pumpe gebildeten Organe vorgesehen sind, wobei das andere weiterfunktioniert.

7. Gerät nach einem der Ansprüche 1 bis 6, in welchem die Turbine (8) eine vertikale Achse hat und als Zentrifugal-oder Helikozentrifugal-Turbine ausgeführt ist, dadurch gekennzeichnet, daß die genannte Turbine und der an die Turbine angrenzende Abschnitt der Führungsleitung für die Luftströmung in selber Höhe über dem Boden angebracht sind wie die Längsträger des Gestells, und zwar zwischen den Längsträgern (1, 2) des Gestells oder parallel zu jenen.

8. Gerät nach einem der Ansprüche 1 bis 6, in welchem die die Achse der Turbine (8) vertikal ist, dadurch gekennzeichnet, daß die Turbine (8) und der angrenzende Abschnitt der Führungsleitungen über den Längsträgern (1,2) des Gestells angebracht sind.

9. Gerät nach einem der Ansprüche 7 oder 8, dadurch gekennzeichnet, daß es unter anderem vorne gelegene Luftausgänge (14D,14E) aufweist.

10. Gerät nach einem der Ansprüche 1 bis 9, dadurch gekennzeichnet, daß die vertikale Gelenkachse des Zuggestänges am Gestell ungefähr in der Mitte des Abstands zwischen der Achse der Räder, mit denen das Gestell ausgestattet ist, und der Achse der hinteren Traktorräder liegt.

**Claims**

1. Device for spraying a product onto crops, comprising:

-- a chassis (1, 2), having means for connecting the device to a tractor;

-- a storage tank (7) for the product, borne by the chassis;

-- a turbine (8) capable of creating a flow of air, substantially horizontal, parallel to the direction of advance and directed towards the rear;

-- a transmission shaft serving to drive the turbine from a power connection of the tractor, via an angle gear (20) of which the output shaft is vertical;

-- guide conduits for the air flow (14), their outlet: (14A, 14B, 14C) being situated to the rear of the chassis in respect of the storage tans, these conduits being capable of directing the air outflow from the turbine onto the crops;

-- and means (24) for conveying the product, in a pulverized state, into the flow of air emerging from the guide conduits;

characterized by the fact that the turbine (8) is situated in front of the central part of the tank (7);

by the fact that the turbine (8), at its outlet, supplies an air flow capable of passing under the central part of the tank without any change in direction or with only slight changes in direction, so that the air flowing from the turbine (8) towards the said air outlets (14A, 14B, 14C) passes under the tank, its circulation essentially taking place from the front towards the rear through the said guide conduits (14);

by the fact that the chassis is equipped with a coupling bar (4) capable of pivoting about a vertical axis in relation to the chassis;

and by the fact that the said angle gear (20) is mounted to pivot on the vertical shaft by which the coupling bar is connected to the chassis or in the proximity of the said shaft, the said angle gear having an input (21) connected to the aforementioned power connection and an output connected to the turbine.

2. Device in accordance with Claim 1, characterized by the fact that the turbine (8) is positioned with its axis substantially vertical.

3. Device in accordance with Claims 1 or 2 characterized by the fact that the angle gear comprises a coaxial vertical output shaft which drives the turbine via a belt and pulley assembly.

4. Device in accordance with Claims 1 or 2 characterized by the fact that the angle gear (20) comprises a coaxial vertical output shaft connected to the turbine via a second angle gear (30) fast in rotation with the chassis and connected to the turbine via a transmission shaft.

5. Device in accordance with any one of Claims 1 to 4, characterized by the fact that that a pump (24) designed to convey a liquid contained in the storage tank to at least one spray situated at an output of the air guiding means is positioned substantially on the vertical pivoting axis of the angle gear (20), its input shaft being kinematically connected to the input shaft or output shaft of the said angle gear (20) or possibly of the second angle gear (30).

6. Device in accordance with Claim 5, characterized by the fact that means are provided by which at least one of the elements constituted by the turbine and by the pump can be disengaged while allowing the other to continue to function.

7. Device in accordance with any one of Claims 1 to 6, wherein the turbine (8) has a vertical axis and is of the centrifugal or heliocentrifugal type, characterized by the fact that the said turbine and that section of the air flow guide conduit which is adjacent to the turbine are positioned at the same height above the ground as the side frames of the chassis and between the said side frames (1, 2) of the chassis or parallel with these latter.

8. Device in accordance with any one of Claims 1 to 6, wherein the turbine (8) has a vertical axis, and characterized by the fact that the turbine (8) and that section of the guide conduits which is adjacent thereto are positioned above the side frames (1, 2) of the chassis.

9. Device in accordance with either of Claims 7, 8, characterized by the fact that it also comprises air outlets situated in the front (14D, 14E).

10. Device in accordance with any one of claims 1 to 9, characterized by the fact that the vertical shaft by which the coupling bar is connected to the chassis is situated approximately half-way along the distance separating the axle of the wheels with which the chassis is equipped from the axle of the rear wheels of the tractor.

FIG.:1

FIG.:2

FIG.:3

FIG.:4

FIG.:5